# EUROPÄISCHE PATENTSCHRIFT

(11) **EP 0 603 689 B1**
(45) Veröffentlichungstag und Bekanntmachung des Hinweises auf die Patenterteilung: **03.09.1997**
(21) Anmeldenummer: 93120024.0
(22) Anmeldetag: 11.12.1993
(51) Int. Cl.: B60R 25/02

(54) **Diebstahlsicherung für Fahrzeuge**
Antitheft device for vehicles
Dispositif anti-vol pour véhicules

(30) Priorität: 23.12.1992 US 996738
(43) Veröffentlichungstag der Anmeldung: 29.06.1994
(73) Patentinhaber: Winner International Royalty Corporation, Sharon, Pennsylvania 16146 (US)
(72) Erfinder: Tobias, Marc W., Sioux Falls, South Dakota 57105 (US)
(74) Vertreter: Hennicke, Albrecht, Dipl.-Ing.

(56) Entgegenhaltungen:
- US-A- 4 738 127
- US-A- 4 935 047
- US-A- 5 131 245

## Beschreibung

Die Erfindung betrifft eine Diebstahlsicherungsvorrichtung nach dem Oberbegriff des Anspruchs 1.

Die Erfindung ist insbesondere bei Diebstahlsicherungen anwendbar, die zum Verriegeln eines Lenkrads aus einer zusammengeschobenen Stellung in eine auseinandergezogene Stellung gebracht werden und dabei automatisch einrasten und verriegeln. Es ist für den Fachmann jedoch leicht möglich, die Erfindung auch bei Fahrzeuglenkradverriegelungsvorrichtungen zu verwenden, die nicht von selbst einrasten.

Diebstahlsicherungsvorrichtungen zur Befestigung an einem Lenkradkranz sind aus der US-PS 4 738 127 und aus der US-PS 4 935 047 bereits bekannt, deren Inhalt zum Offenbarungsgehalt der vorliegenden Erfindung gemacht wird, so daß Einzelheiten der bekannten Vorrichtungen hier nicht weiter beschrieben werden müssen. Die vorliegende Erfindung stellt eine Verbesserung der bekannten Vorrichtungen dar. US-PS 4 935 047 beschreibt eine Diebstahlsicherungs vorrichtung nach dem Oberbegriff des Anspruchs 1.

Die zeitliche Entwicklung von mechanischen Diebstahlsicherungen ist in den oben genannten Patentschriften erläutert, so daß für eine ausführliche Beschreibung des bekannten Standes der Technik auf diese Druckschriften verwiesen wird. Die Fahrzeugdiebstahlsicherungen von der Art, auf die sich die Erfindung bezieht, haben einen vorspringenden Teil, der sich über den Kranz des Lenkrads erstreckt, an dem die Vorrichtung befestigt ist. Der vorspringende Abschnitt schlägt an Teilen im Inneren des Fahrzeugs an und verhindert so ein vollständiges Drehen des Lenkrades. Das Fahrzeug ist dadurch nicht vollständig durch die Vorrichtung blockiert, aber kann dennoch nicht gefahren werden, da das Lenkrad nur um kleine Winkel gedreht werden kann.

Die US-PS 4 738 127 beschreibt eine Vorrichtung, die eine teleskopierbare Stange-Rohranordnung zusammen mit einem schlüsselbetätigten Schloß mit einer Kugelverriegelung verwendet, die es erlaubt, die gezahnte Stange aus dem Rohr bzw. Mantel auszuziehen und in Verriegelungsstellung am Lenkrad einrasten zu lassen. Diese bekannte Vorrichtung ist sehr weit verbreitet und erfüllt ihren Zweck zur vollständigen Zufriedenheit. Sie hat ein sicheres und festes Schloß, bei dem ein teilzylindrisches, halbmondförmiges Verriegelungselement in eine von vielen gezahnten, in der Stange angeordneten Rillen hineingedreht wird, um die Vorrichtung zu verriegeln. Diese Vorrichtung hat den Nachteil, daß sein Schlüssel sowohl dann in sein Schloß eingesetzt werden muß, wenn die Vorrichtung vom Lenkrad entfernt wird als auch dann, wenn die Vorrichtung am Lenkrad angebracht wird.

Die in der US-PS 4 935 047 offenbarte Vorrichtung hat ein Schloß, das es erlaubt, die Vorrichtung am Lenkrad eines Fahrzeugs anzubringen, ohne einen Schlüssel im Schloß betätigen zu müssen, wenn sich die Vorrichtung zuvor in ihrer eingeschobenen Stellung befindet. Dies bedeutet eine Erleichterung für den Fahrzeugführer. Nachdem der Fahrer den Wagen angehalten hat und den Schlüssel aus dem Zündschloß abgezogen hat, befestigt er die Diebstahlsicherung am Lenkrad. Wenn er den Schlüsselbund zuvor in seine Tasche gesteckt hat, ist es lästig, diesen wieder hervorzuholen, um die Diebstahlsicherung zum Anbringen am Lenkrad aufzuschließen und nach dem Anbringen abzuschließen. Diese Vorrichtung hat einen Schließmechanismus, der es dem Benutzer erlaubt, die Vorrichtung ohne Betätigung eines Schlüssels aus ihrer zusammengeschobenen Lage in eine auseinandergezogene Lage auseinanderzuziehen, in der die Haken der Stange und des Mantelrohrs in den Drehkranz des Lenkrads in der bekannten Weise eingreifen.

Mit zunehmender Verbreitung dieser bekannten Vorrichtungen sind Fahrzeugdiebe hiermit mehr und mehr vertraut geworden. Es ist natürlich wohlbekannt, daß jede Diebstahlsicherung umgangen werden kann und daß gut ausgebildete Diebe in ein Fahrzeug einbrechen können und dieses stehlen können, unabhängig davon, wie raffiniert die am Fahrzeug angeordnete Diebstahlsicherung auch sein mag. Daher ist es auch erstes Ziel einer jeden Diebstahlsicherung, die verwendeten Vorrichtungen so sicher zu machen, daß sie einem professionellen Fahrzeugdieb soviel Widerstand entgegensetzen, um diesen vom Diebstahl des Wagens abzuschrecken, der mit der Diebstahlsicherung versehen ist. Die oben beschriebenen Vorrichtungen bestehen hierzu aus gehärtetem Stahl, der nicht leicht geschnitten oder gesägt werden kann. Die Vorrichtung ist teleskopierbar und bietet praktisch keine Angriffsstellen für Brecheisen, die sonst zum Entfernen der Vorrichtung vom Lenkrad benutzt werden könnten. Auch verhindert die besondere mechanische Anordnung, in der die Schloßzuhaltung in der Anti-Diebstahlvorrichtung eingebaut ist, daß diese aus der Vorrichtung entfernt oder ausgehebelt werden kann.

Trotz der genannten Maßnahmen hat sich gezeigt, daß Diebstahlsicherungen mit einem Schloß nach der US-PS 4 935 047 mitunter mit einem herkömmlichen Einbruchswerkzeug geöffnet werden können. Bei dieser Vorrichtung gibt es einen Spielraum zwischen der Stange und dem Mantelrohr, der von einer unter Federvorspannung stehende Klinke ausgefüllt ist, die auch als schlüsselbetätigter Verriegelungsmechanismus dient. Zum Aufbrechen des Schlosses wird ein Dietrich oder ein Blechstreifen zwischen die federbelastete Rastklinke und den Rastzahn im Stangenteil eingeschoben, in den die Klinke eingreift, wodurch die Klinke in ihre Bohrung zurückgeschoben wird, so daß die Stange im Mantelrohr verschoben werden kann. Auf diese Weise kann dann die Stange in das Mantelrohr eingeschoben und die Vorrichtung zum Lenkrad entfernt werden.

Aufgabe der Erfindung ist es, einen Verriegelungsmechanismus für eine am Lenkrad befestigte Fahrzeugdiebstahlsicherung zu schaffen, die mit herkömmlichem Einbruchswerkzeug nicht leicht aufgebrochen werden kann.

Diese Aufgabe wird mit einer Fahrzeug-Diebstahlsicherungsvorrichtung der eingangs genannten Art dadurch gelöst, daß der Innendurchmesser des Rohres um höchstens 2 mm größer ist als der größte Durchmesser der Stange und daß das vordere Ende der Rastklinke eine bogenlinienförmig gekrümmte Scheitelfläche hat.

Durch die erfindungsgemäße Ausgestaltung gelingt es, Manipulationen an der Vorrichtung mit einem Blechstreifen, Dietrich od.dgl. nahezu unmöglich zu machen, da der Ringspalt zwischen Rohr und Zahnstange so klein gemacht ist, daß sich nur ein sehr dünner Blechstreifen einschieben läßt, dessen Biegefestigkeit nur sehr gering sein kann und der sich bald verformt und in der Regel die Rastklinke gar nicht erreicht. Gelingt es jedoch trotzdem, einen sehr dünnen Blechstreifen bis zu der Rastklinke vorzuschieben, findet der Blechstreifen an der Rastklinke keine Lücke, da deren Scheitelfläche bogenlinienförmig gekrümmt und an die Außenkontur der Rastzähne angepaßt ist. Die neue Ausführungsform der Diebstahlsicherung nach der Erfindung ist deshalb nicht nur ebenso einfach zu handhaben wie die Sicherungsvorrichtung nach der US-PS 49 35 047, sondern sie ist auch weitestgehend aufbruchsicher.

Vorteilhafte Ausgestaltungen der Erfindung ergeben sich aus den Unteransprüchen.

Besonders vorteilhaft ist es, wenn die Diebstahlsicherung sowohl ein geringes Spiel zwischen Stangenteil und Mantelteil als auch möglichst kurze äußere Zylinderflächen zwischen den Zähnen als auch eine kurvenförmige Rastklinkenvorderkante hat, so daß die Vorrichtung im Zusammenwirken dieser Merkmale besonders sicher ist und nur schwer mit herkömmlichen Einbruchsmethoden geöffnet werden kann.

Mit der Erfindung wird eine Fahrzeug-Diebstahlsicherung geschaffen, die am Lenkradkranz befestigt werden kann, mit einem länglichen, rohrförmigen Mantelteil mit einem ersten und einem zweiten Ende, einem ersten Hakenmechanismus, der in den Kranz des Lenkrads von innen eingreift, einem länglichen Stangenteil, der in dem Mantelteil teleskopierbar aufgenommen ist und der einen zweiten Hakenmechanismus aufweist, der gegenüber dem ersten Hakenmechanismus angeordnet ist und in den Kranz des Lenkrads eingreift. Die Diebstahlsicherung hat weiterhin einen vorspringenden Teil, der sich über einen der Hakenmechanismen und in Arretierstellung über den Lenkradkranz hinaus erstreckt und weist ferner einen Schließmechanismus mit einem schlüsselbetätigten Schloß auf, das in seiner Schließstellung ein Auseinanderziehen des Stangenteils aus dem Mantelteil erlaubt, jedoch verhindert, daß der Stangenteil in den Mantelteil eingeschoben werden kann, solange sich das Schloß nicht in der aufgeschlossenen Stellung befindet. Der Stangenteil hat eine Vielzahl von im Längsabstand angeordneten Rastzähnen, wobei jeder Zahn eine ringförmige Anschlagfläche hat, die sich etwa rechtwinklig von der Stangenaußenfläche radial nach innen bis zu einem inneren Stangendurchmesser erstreckt, und jeder Rastzahn weist einen Kegelstumpfteil auf, der etwa an der ringförmigen Anschlagfläche angrenzt und dessen kleinerer Durchmesser dem inneren Stangendurchmesser und dessen größerer Durchmesser dem äußeren Durchmesser des Stangenteils entspricht. Dabei ist die Anordnung so getroffen, daß sich zwischen dem größeren Durchmesser des Kegelstumpfes eines Rastzahns und der ringförmigen Anschlagfläche eines benachbarten Rastzahns ein lediglich kurzes, zylindrisches Oberflächenstück befindet. Der Schließmechanismus hat eine Rastklinke mit einem Einrastende, das in die umlaufenden Zähne eingreifen kann und gegen die ringförmige Anschlagfläche anschlägt, wenn die Vorrichtung verschlossen ist, wobei das Einrastende eine angepaßte Kantenfläche hat, die sich ein nur kurzes Stück in Stangenlängsrichtung erstreckt, so daß es die kurze Länge der äußeren Zylinderfläche und die kurze Länge der Rastklinkenkante schwierig machen, einen Fremdgegenstand in den Schließmechanismus einzuführen und die Klinke aus ihrem Eingriff mit dem jeweiligen Stangenrastzahn zu bringen.

In weiterer Ausgestaltung ist die Kantenoberfläche der Rastklinke, die den Rastzahn berührt, bogenförmig ausgestaltet, wobei der Kurvenradius dem Radius der äußeren zylindrischen Umfangsfläche des Stangenteils entspricht. Zusätzlich ist der Außendurchmesser der Stange zweckmäßig in einem engen Anmessungsverhältnis zum Innendurchmesser des Mantelteils gehalten, um die Sicherheit der Vorrichtung weiter zu verbessern.

In vorteilhafter Weise wird mit der Erfindung eine verbesserte Fahrzeugdiebstahlsicherung geschaffen, die besonders wirkungsvolle Sicherheitsmerkmale aufweist. Die Erfindung hat den besonderen Vorteil, daß damit eine besonders sichere Fahrzeugdiebstahlsicherung geschaffen wird, ohne die Herstellungskosten gegenüber den bekannten Vorrichtungen nennenswert zu erhöhen.

In vorteilhafter Ausgestaltung der Erfindung wird eine Autolenkradverriegelung geschaffen, die einrastend in eine Betriebsstellung am Fahrzeuglenkrad ausziehbar ist und die einen verbesserten Mechanismus aufweist, der die Verriegelung in diebstahlsicherer Schließlage hält.

Die Vorrichtung nach der Erfindung besteht zweckmäßig aus einer etwa zylindrischen Stange-Rohr-Kombination, wobei die Stange mit umlaufenden Rastzähnen versehen ist und die Vorrichtung eine schlüsselbetätigte, federbelastete Rastklinke aufweist, die in einen der Rastzähne eingreifen kann und wobei die Rastzähne besonders ausgestaltet sind, um sicherzustellen, daß die Rastklinke sicher in einem der Zähne festgelegt ist.

Weitere Merkmale und Vorteile der Erfindung ergeben sich aus der nachfolgenden Beschreibung und der Zeichnung, worin eine bevorzugte Ausführungsform der Erfindung an einem Beispiel näher erläutert ist. Es zeigt:
- Fig. 1: eine an einem Lenkrad befestigte Lenkradverriegelungsvorrichtung nach der Erfindung in einer perspektivischen Darstellung;
- Fig. 2: den Gegenstand der Fig. 1 in einer Schnittdarstellung nach Linie 2-2;
- Fig. 3: den Gegenstand der Fig. 2 im Schnitt nach Linie 3-3;
- Fig. 4: eine vergrößerte Darstellung des Gegenstands der Fig. 2;
- Fig. 5: den Gegenstand der Fig. 4, mit anderer Stellung der Rastklinke und
- Fig. 6: den Gegenstand der Fig. 5 in einem Schnitt nach Linie 6-6.

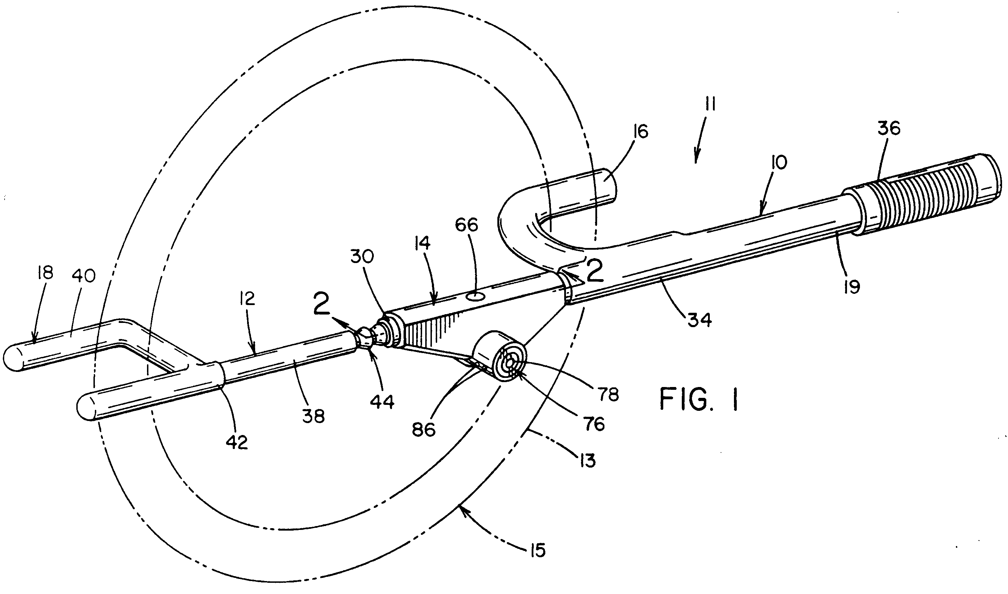

Fig. 1 zeigt in einer perspektivischen Darstellung eine Lenkradverriegelungsvorrichtung 11 nach der Erfindung, die an einem Lenkradkranz 13 eines in Strichpunktlinien dargestellten Fahrzeuglenkrads 15 angeordnet ist. Die Verriegelungsvorrichtung 11 besteht im wesentlichen aus einem langgestreckten Rohr- oder Mantelteil 10, in dem ein länglicher Stangenteil 12 teleskopierbar angeordnet ist. Am Mantelteil 10 befindet sich ein Schloßgehäuse 14. Der Mantelteil 10 und der Stangenteil 12 sind mit Kranzhaken 16 bzw. 18 versehen, die an gegenüberliegenden Stellen des Lenkrads von innen in den Lenkradkranz 13 eingreifen. Am Schloßgehäuse 14 sind Mittel vorgesehen, die es ermöglichen, den Stangenteil 12 in einer von vielen möglichen Axialstellungen im Mantelteil 12 zu positionieren und zu verriegeln. Der Mantelteil 10 hat einen länglichen Vorsprung 19, der sich über den ersten Kranzhaken 16 weit genug ins Wageninnere erstreckt, um dort an einem Teil des Fahrzeugs anzustoßen, wenn das Lenkrad gedreht wird. Er blockiert dadurch das Lenkrad und verhindert dessen vollständige Drehung.

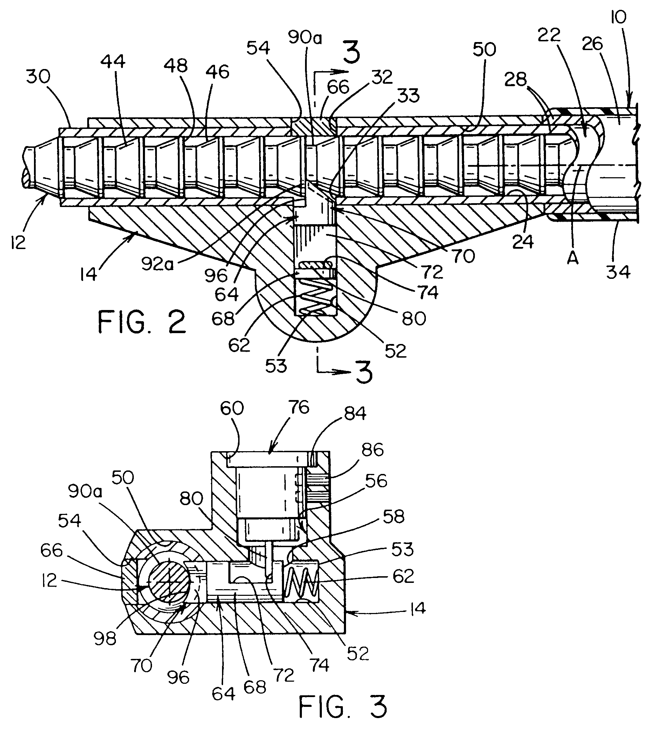

Wie insbesondere aus Fig. 2 hervorgeht, besteht der Mantelteil 10 im wesentlichen aus einem länglichen Rohr 22 mit einem konzentrisch um dessen Längsachse A angeordneten kreisförmigen Querschnitt. Das Rohr 22 bildet eine zentrale Aufnahme 24 und wird von einem äußeren Manschettenrohr 26 umgeben, mit dem es einen doppelwandigen Bereich 28 bildet, wie dies in Fig. 2 erkennbar ist. Ein Teil 30 des Rohres 22 erstreckt sich axial über das eine Ende des doppelwandigen Bereichs 28 hinaus und weist zwei miteinander fluchtende Öffnungen 32, 33 auf.

Der erste Kranzhaken 16 ist etwa U-förmig ausgestaltet und ist in Axialrichtung in entgegengesetzter Richtung zum Teilstück 30 des Mantelteils 10 hin offen, wobei der Kranzhaken 16 fest mit dem Mantelteil 10 am äußeren Manschettenrohr 26 des Doppelwandbereichs 28 befestigt ist. Das innere Rohr 22 und das äußere Manschettenrohr 26 bestehen vorzugsweise aus Rohrstücken aus herkömmlichem Konstruktionsstahl, die miteinander verschweißt sind. Auch der erste Kranzhaken 16 besteht zweckmäßig aus einem herkömmlichen Konstruktionsstahlrohr, das durch Biegen oder anderes geeignetes Umformen in die U-Form gebracht wird und mit dem äußeren Manschettenrohr verschweißt ist. Äußeres Manschettenrohr 26 und erster Kranzhaken 16 sind mit einer haltbaren Kunststoffbeschichtung 34 versehen, die eine nicht scheuernde Oberfläche am Mantelteil 10 bildet. Am Ende des Verlängerungsstücks 19 des Mantelteils 10 befindet sich ein Handgriff.

Der Stangenteil 12 besteht im wesentlichen aus einer länglichen Stange 38 (Fig. 1) mit kreisförmigem Querschnitt. Der Außendurchmesser der Stange 38 ist so gewählt, daß er geringfügig kleiner ist als der Innendurchmesser des Durchlasses 24 im Mantelteil 10, so daß die Stange 38 frei im Mantelteil 10 verschiebbar ist. Der an der Stange 38 angeordnete zweite Kranzhaken 18 wird von einem etwa L-förmigen Stück 40 gebildet, das fest mit der Stange 38 verbunden und in einer dem ersten Kranzhaken entgegengesetzten Richtung offen ist, so daß er auf der gegenüberliegenden Seite des Lenkrads 15 in den Lenkradkranz 13 eingreifen kann. Der zweite Kranzhaken 18 ist ebenfalls mit einer haltbaren Kunststoffbeschichtung 42 versehen. An der Stange 38 sind mehrere Rastzähne 44 in Stablängsrichtung nebeneinander angeordnet. Jeder Rastzahn 44 hat eine Kegelstumpffläche 46, die sich vom zweiten Kranzhaken 18 aus in Längsrichtung betrachtet radial nach außen erweitert. Ferner weist jeder Rastzahn eine ringförmige Anschlagfläche 48 auf, die sich senkrecht zur Achse A erstreckt. Die Stange 38 und das den zweiten Kranzhaken 18 bildende L-Stück 40 bestehen vorzugsweise aus einsatzgehärtetem Stahl.

Das Schloßgehäuse 14 weist einen Durchgang 50 mit kreisförmigem Querschnitt auf, der einen Durchmesser hat, der dem Außendurchmesser des vorragenden Teilstücks 30 des Rohrs 22 entspricht, so daß das Schloßgehäuse 44 auf das Rohr 22 aufgeschoben und dort befestigt werden kann. Das Schloßgehäuse 14 hat eine erste Bohrung 52, die senkrecht zur Längsachse A verläuft und die ein geschlossenes inneres Ende 53 und ein offenes äußeres Ende 54 hat. Die erste Bohrung 52 kreuzt den Durchgang 50 und fluchtet mit den Öffnungen 32, 33 in dem vorspringenden Teilstück 30 des äußeren Manschettenrohrs 26. Das Schloßgehäuse weist ferner eine zweite Bohrung 56 mit einem äußeren, offenen Bohrungsende 60 und einem inneren Bohrungsende 58 auf, mit dem sie in die erste Bohrung 52 mündet. Im Schloßgehäuse 14 ist ein Schließmechanismus angeordnet, mit einer in der ersten Bohrung 52 angeordneten Rastklinke 64, die von einer sich gegen das geschlossene Ende 53 der ersten Bohrung 52 abstützenden Schraubendruckfeder 62 durch die Öffnung 33 ein Stück in den zentralen Durchlaß 24 des Rohrs 22 gedrückt wird. Das offene, äußere Ende 54 der ersten Bohrung 52 ist mit einem Stöpsel 66 verschlossen. Die Rastklinke 74 besteht aus einem Schaftstück 68 mit einer schrägen Endfläche 70, einer Aussparung 72 und einer Kontaktfläche 74 im Inneren der Aussparung 72. Zum Schließmechanismus gehört ferner ein Schließzylinder 76 mit einem Schlüsselloch 78, der in der zweiten Bohrung 56 aufgenommen ist, sich gegen eine Bohrungsschulter 84 abstützt und mit Verriegelungsstiften 86 gesichert ist. Der Schließzylinder hat einen Betätigungsfinger 80 oder wahlweise einen etwa zylindrischen Nocken (nicht dargestellt), der in die Aussparung 72 in der Rastklinke 64 eingreift und dort mit der Schaltfläche 74 zusammenwirkt, wie dies im folgenden beschrieben wird.

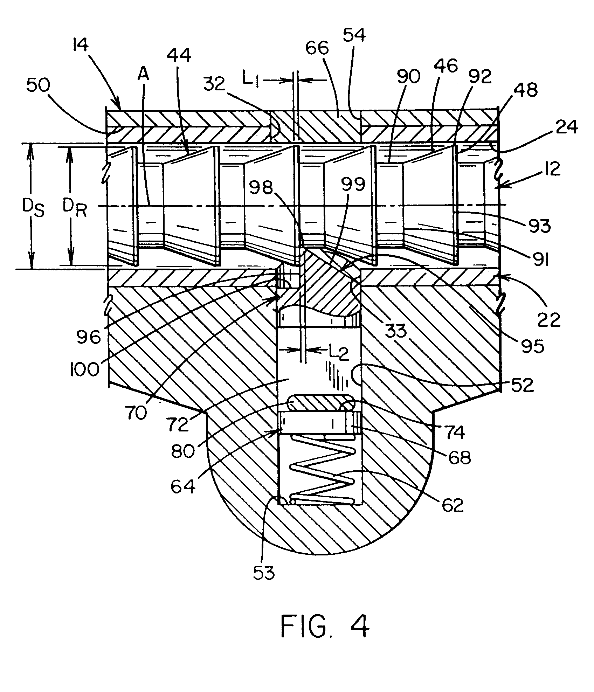

Die Sicherheit der Anti-Diebstahlvorrichtung 11 wird durch die in den Fig. 4,5 und 6 erkennbaren Merkmale verbessert. Dabei handelt es sich im wesentlichen um drei Änderungen gegenüber den bekannten Vorrichtungen, von denen jede für sich bereits die Sicherheit der Vorrichtung 11 verbessert und die zusammengenommen die Vorrichtung 11 so verbessern, daß es nahezu unmöglich ist, das Schloß zu entriegeln oder mechanisch aufzubrechen, ohne daß der Schlüssel verwendet wird, um das Schloß 76 aufzuschließen.

Die erste Änderung betrifft das Verhältnis der Abmessungen zwischen dem Innendurchmesser des Mantelteils 10 und dem Außendurchmesser der Rastzähne 44. Wie am besten in Fig. 4 erkennbar ist, hat der Durchmesser der Stange 12 einen Wert D_{R}. Jeder Rastzahn 44 hat eine ringförmige Anschlagfläche 48 und eine Kegelstumpffläche 46 neben der Anschlagfläche 48. Bei der bevorzugten Ausführungsform hat jeder Rastzahn auch noch zwei Zylinderflächen. Die erste Zylinderfläche 90 befindet sich zwischen der Anschlagfläche und dem Kegelstumpfende 91 mit geringerem Durchmesser, wobei sie ohne Stufe an dieses Kegelstumpfende 91 anschließt. Diese erste Zylinderfläche 90 ist nicht unbedingt notwendig. Bei den einzelnen Rastzähnen könnte sich auch einfach nur die ringförmige Anschlagfläche 48 soweit radial nach innen erstrecken, bis sie direkt auf den kleineren Durchmesser 91 des Kegelstumpfes trifft .(In der gezeigten bevorzugten Ausführungsform erstreckt sich die Anschlagfläche 48 radial nach innen und stößt dort auf die erste Zylinderfläche 90, die den gleichen Durchmesser hat wie der geringere Durchmesser 91 des Kegelstumpfes 46). Wie aus der Zeichnung hervorgeht, erweitert sich der Kegelstumpf 46 in Längsrichtung radial nach außen von seinem kleineren Durchmesser 91, bis er mit einer zweiten Zylinderfläche 92 zusammentrifft. Die zweite, äußere Zylinderfläche 92 hat also denselben Durchmesser wie der größte Durchmesser 93 des Kegelstumpfes 46. Der größere Durchmesser 93 und der Durchmesser der zweiten Zylinderfläche 92 sind mit D_{R} bezeichnet und sind gleich dem Durchmesser der festen Stange 38 des Stangenteils 12. Der Stangenteil 12 wird also in Längsrichtung der Achse A mit den zweiten Zylinderflächen 92 der Rastzähne 44 im Mantelteil 10 gehalten bzw. geführt, die am Innenumfang des zentralen Durchlasses 24 anliegen.

Der Innendurchmesser des zentralen Durchlasses 24 beträgt - wie in Fig. 4 gezeigt - D_{S}. Es ist ersichtlich, daß zum Aufbrechen der Verriegelung ein Blechstück od.dgl. nötig ist, das zwischen den Stangenteil 12 und den Mantelteil 10 eingeführt wird und durch den Freiraum zwischen diesen Teilen bis zum Kontakt mit der Rastklinke 64 verschoben wird. Um den Stangenteil 12 im Mantelteil 10 verschieben zu können, muß der Innendurchmesser D_{S} des Mantelteils 10 etwas größer sein als der Außendurchmesser D_{R} des Stangenteils 12. Stangenteil 12 und Mantelteil 10 haben jedoch annähernd denselben Durchmesser und der Innendurchmesser D_{S} des Mantelteils 10 ist höchstens etwa 2 mm (0,08 ") größer als der Außendurchmesser des Stangenteils 12. Allein dieses besondere Merkmal der Erfindung erhöht bereits die Sicherheit der Anti-Diebstahlvorrichtung 11.

In weiterer Ausgestaltung der Erfindung ist die Länge L₁ der zweiten Zylinderfläche nur gering und beträgt zweckmäßig nicht mehr als 1 mm ( 0,04 ").Theoretisch wäre es möglich und wünschenswert, wenn diese Länge L₁ "0" betragen würde. Beim praktischen Gebrauch wird jedoch der Benutzer der Vorrichtung unvermeidbar die Rastzähne 44 des Stangenteils 12 berühren. Wenn der Längsabstand zwischen Kegelstumpffläche 46 und Anschlagfläche 48 gegen 0 geht, reduziert sich die zweite Zylinderfläche 92 auf eine scharfe Kante, an der sich der Benutzer verletzen kann. Um dies zu vermeiden, wird eine scharfe Kante, die sonst am Übergang von der Anschlagfläche zur Kegelstumpffläche vorhanden wäre, durch die zweite Zylinderfläche 92 gebrochen. Die Rastklinke 64 ist an ihrem vorderen Rastklinkenende 70 in ähnlicher Weise ausgestaltet.

Das vordere Rastklinkenende 70 greift in einen Rastzahn 44 ein. Das Rastklinkenende hat eine schräge Stirnfläche 95, an die eine ebene Kontaktfläche 96 angrenzt, gegen die sich die ringförmige Anschlagfläche 48 eines Zahns 44 anlegt, wodurch eine Bewegung der Stange in den Fig. 2,4,6 nach rechts verhindert wird. Die schräge Stirnfläche 95 wird von einer Scheitelfläche 98 begrenzt, von deren einer Seite aus sich eine ebene Kontaktfläche 96 und von deren anderer Seite sich eine spitz auslaufende Kegelstumpffäche 99 erstreckt. In der bevorzugten Ausführung ist das Scheitelsegment 98 nur linienförmig, es ist jedoch in der Zeichnung so dargestellt, als ob es eine gewisse Längsausdehnung hätte, die in Fig. 4 mit L₂ bezeichnet ist. Dies dient nur zur Illustration dafür, daß das Scheitelsegment, eine gewisse Dicke oder Länge L₂ haben kann, die jedoch zweckmäßig nicht größer als 1 mm (0,04") ist. Der Grund für die möglichst geringen Längen L₁ und L₂ von zweiter Zylinderfläche 92 und Scheitelfläche 98 wird im nachfolgenden erläutert.

Das vordere Ende 70 der Rastklinke 64 hat eine Stufe 100, deren Tiefe etwa der Länge der ersten Zylinderfläche 90 entspricht und die ähnlich wie die Länge L₂ weder unbedingt notwendig, noch besonders erwünscht ist, sondern in der Zeichnung lediglich dargestellt ist, um eine andere Ausgestaltungsmöglichkeit des Profils des vorderen Rastklinkenendes 70 zu zeigen; das heißt, bei der bevorzugten Ausgestaltung weist das vordere Klinkenende 70 lediglich die spitz auslaufende Kegelstumpffläche 99 mit angrenzender Scheitelfläche 98 auf, an deren anderer Seite sich die Kontaktfläche 96 der Rastklinke anschließt.

Am Klinkenende 70 können noch weitere Ausschnitte od.dgl. vorgesehen sein, jedoch sind die drei benachbarten Segmente oder Flächen, nämlich die Scheitelfläche 98, die spitz auslaufende Kegelstumpffläche 99 und die Kontaktfläche 96 bei jeder Ausgestaltung des Klinkenendes erforderlich.

Wie leicht aus der Zeichnung zu erkennen ist, bewirken die ersten Zylinderflächen 90 am Zahngrund der Stange 12, daß diese mit etwas Spiel oder Beweglichkeit im Mantelteil axial verschiebbar ist, bis das vordere Klinkenende 70 an einer Anschlagfläche oder einer Kegelstumpffläche anliegt. Dies ist insoweit zweckmäßig, als es dem Benutzer ein besseres Gespür beim Anbringen der Anti-Diebstahlsicherung 11 am Lenkrad 15 gibt. Die erste Zylinderfläche ist nicht unbedingt notwendig und kann fortgelassen werden, da auch die Kegelstumpffläche 46 an der Stange eine Toleranz zur Verfügung stellt, die aber ein etwas anderes "Gefühl" vermittelt, als es mit der Zahnstangenausgestaltung 44 erreicht wird, wie sie in der Zeichnung dargestellt ist.

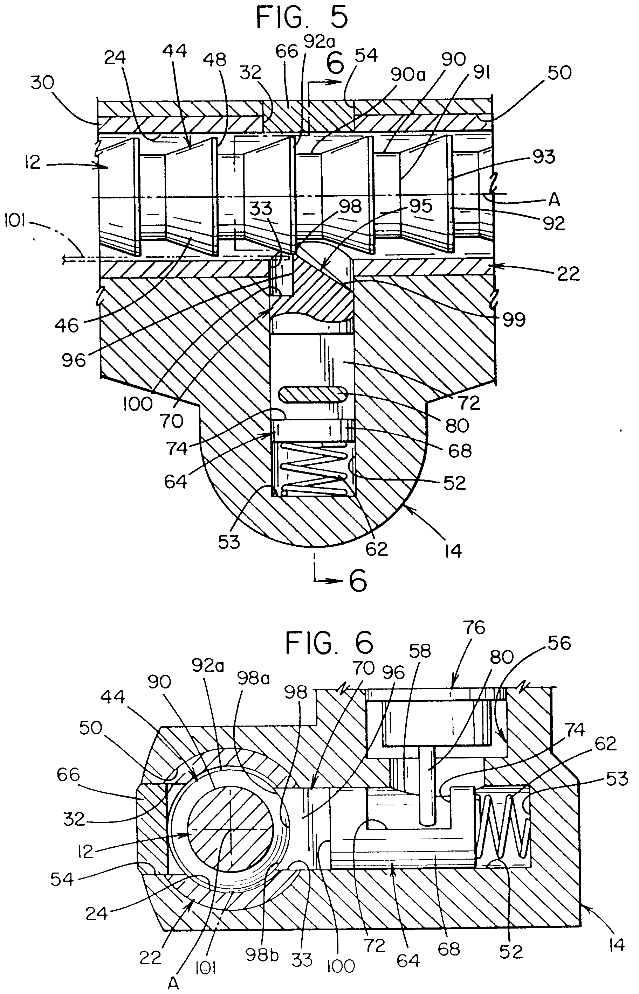

Wie am besten aus Fig. 6 erkennbar ist, ist das Scheitelsegment 98 bzw. die Scheitelfläche krummlinig begrenzt, und zwar genauer gesagt bogenförmig, wobei der Krümmungsradius dem Radius Dr/₂ des größeren Außenumfanges des Stangenteils 12 entspricht. Wenn das Scheitelsegment 98 derartig ausgestaltet ist, liegt es über seine gesamte Breite, also auch mit seinen querseitigen Enden 98a, 98b an der äußeren Zylinderfläche 92 eines Rastzahns 44 an (Fig. 6), wenn sich die Rastklinke 64 in der in Fig. 5 und 6 gezeigten Stellung befindet. Bei Verwendung eines geradlinigen Scheitelsegments 98 würde in dem gezeigten Fall ein Zwischenraum zwischen Rastzahn 44 und Klinkenscheitelsegment 98 verbleiben.

Die Funktionsweise der automatisch arretierenden Verriegelungsvorrichtung der erfindungsgemäßen Diebstahlsicherung 11 ergibt sich klar aus der bisherigen Beschreibung und ist auch bereits in der genannten US-PS 4 935 047 erklärt. Für die vorliegende Erfindung mag es daher ausreichen, festzustellen, daß die Vorrichtungen in einfacher Weise so am Lenkrad angebracht werden, daß der in den Mantelteil 10 eingeschobene Stangenteil 12 aus diesem herausgezogen wird, bis die Kranzhaken 16,18 von innen an einander diametral gegenüberliegenden Stellen in den Lenkradkranz 13 eingreifen, wie dies in Fig. 1 gezeigt ist. Dabei ist es nicht notwendig, zuvor den Schließzylinder 76 mit einem Schlüssel aufzuschließen. Wenn der Stangenteil 12 aus dem Mantelteil 10 herausgezogen wird, bewegt er sich gem. Fig. 5 vom Schließgehäuse 14 aus nach links. Die Druckfeder 62 hält die Sperrklinke 64 unter Vorspannung in der Bohrung 52, so daß das vordere Klinkenende 70 die Rastzähne beim Herausziehen der Stange 12 nacheinander berührt. Dabei bewegen sich die einzelnen Zähne 44 erst mit ihrer ersten Zylinderfläche 90, dann mit der Kegelstumpffläche 46 und schließlich mit ihrer zweiten Zylinderfläche 92 an der schrägen Klinkenfläche 95 entlang, bis die Klinke hinter dem benachbarten Zahn einrastet und mit ihrem vorderen Ende an dessen erster Zylinderfläche anliegt.

Sobald die Kranzhaken 16, 18 an der Innenseite des Lenkradkranzes 13 fest anliegen, kann die Stange nicht weiter aus dem Mantelteil 10 herausgezogen werden. Ein Einschieben des Stangenteils 12 in den Mantelteil 10 (in Fig. 5 nach "rechts") wird dadurch verhindert, daß die Anschlagfläche 48 der Sperrklinke 64 gegen die Kontaktfläche 96 anschlägt. Um die Vorrichtung vom Lenkrad abzunehmen, muß ein Schlüssel in den Schließzylinder eingeführt und gedreht werden, wodurch die Rastklinke in die in Fig. 5 gezeigte Lage zurückgezogen wird und der Stangenteil 12 dann frei in beiden Richtungen im Mantelteil verschiebbar ist.

Um den Verriegelungsmechanismus unbefugt zu öffnen, muß die Klinke 64 in ihre zurückgeschobene Lage gedrückt werden, wie in Fig. 5 gezeigt ist. Die Klinke gelangt in diese Lage, wenn der Nocken oder der Betätigungsfinger 80 des Schließzylinders betätigt wird oder auch dann, wenn der Stangenteil 12 aus dem Mantelteil 10 (in Fig. 5 nach "links") herausgezogen wird, wobei die Klinke 64 aufgrund der speziellen Form der Rastzähne 44 von diesen in die Bohrung 52 entgegen der Wirkung der Druckfeder 62 gedrückt wird. Bei den bekannten Vorrichtungen kann die Klinke auch mit Hilfe eines Dietrichs, eines Blechstreifens, Keils od.dgl. geöffnet werden, der in den Zwischenraum zwischen Stangenteil 12 und Mantelrohr 30 eingeführt wird. Ein derartiges Aufbruchswerkzeug ist in den Fig. 5 und 6 bei 101 gestrichelt dargestellt. Wie bereits erwähnt, beträgt der Spielraum zwischen Stange und Mantel bei der Erfindung nicht mehr als etwa 2 mm. Zwar kann ein Dietrich oder Blechstreifen 101 sehr dünn, z.B. nur wenige Zehntel Millimeter dick sein. Aber selbst dann ist es aufgrund der Abmessungen des Schloßgehäuses 14 außerordentlich schwierig, einen Streifen 101 von der offenen Seite des Mantelrohrs 30 zwischen Stange und Mantelteil 10 in eine Stellung nahe der Klinke 64 bzw. des Stöpsels 66 einzuschieben.

Es ist ferner ersichtlich, daß durch die geringe Länge L₁ der äußeren Zylinderfläche 92 die Stellung der Teile, wie sie in Fig. 5 gezeigt ist, nur eine sehr kurze Zeit erreicht wird, wenn der Stangenteil 12 in seine Verriegelungsstellung ausgezogen wird. Diese Stellung der Klinke an einem Rastzahn ist nicht stabil und nicht leicht erreichbar bzw. reproduzierbar. Das vordere Ende der Rastklinke wird vielmehr entweder an der Kegelstumpffläche 46 oder an der ersten Zylinderfläche 90 anliegen. Sie kann nicht in stabiler Lage zwischen diesen beiden Flächen, d.h. auf der äußeren Zylinderfläche 92 positioniert werden. Um das Schloß aufzubrechen, ist es aber notwendig, daß Stange und Mantel so zueinander positioniert werden, daß die Klinke am Außenumfang der Stange anliegt. Wie man anhand der Fig. 2, 3, 5 und 6 erkennen kann, muß der Dietrich oder der Keil 101 zum Aufbrechen des Verriegelungsmechanismus, d.h. zum Verschieben der Klinke 64 aus ihrer Lage nach Fig. 2 in ihre Lage nach Fig. 5, bis hinter die zweite, äußere Zylinderfläche 92a in den Freiraum zwischen der inneren Zylinderfläche 90a und dem zentralen Durchlaß 24 eingeschoben oder eingeklemmt werden (Fig. 2,5) in den das vordere Klinkenende 70 eingreift. Anschließend muß das Aufbruchswerkzeug in Umfangsrichtung der Stange verschoben und zwischen eine der Kanten 98a, 98b des Scheitelsegments 98 der Klinke 64 und der Stange gebracht werden, um das Klinkenende in die erste Bohrung 52 zu drücken. Bei den bekannten Vorrichtungen hat die zweite äußere Zylinderfläche 92 eine ziemlich große Länge L₁ und bietet ausreichend Spielraum bzw. eine Widerlagerfläche, die es erlaubt, das Einbruchswerkzeug 101 in Umfangsrichtung zwischen dem Scheitelsegment 98 und der inneren ersten Zylinderfläche 90 einzubringen und so die Klinke in die Bohrung 52 zurückzudrücken. Durch Verkürzen der Länge L₁ ist es außerordentlich schwierig, einen Dietrich, Blechstreifen 102 od.dgl. gegen die Klinke 64 zu verkeilen, d.h. den Dietrich 101 zwischen Stange 12 und Scheitelelement 90 der Klinke 64 zu stecken.

Schließlich bewirkt die konkave Ausgestaltung des Scheitelelements 98, daß zwischen Klinkenende 70 und Rastzahn 44 praktisch kein Freiraum ist, zumindest kein so großer Freiraum wie bei den bekannten Vorrichtungen (vgl. Fig. 2 und 6). Diese Ausgestaltung erschwert es zusätzlich, ein Einbruchswerkzeug 101 in seine richtige Lage zu bringen und zwischen die Stange und die Scheitelenden 98a bzw. 98b zu schieben, um die Klinke zurückzudrücken. Jede der drei beschriebenen Änderungen verbessert die Sicherheit der Anti-Diebstahlsicherung 11 in beachtlicher Weise. Zusammengenommen machen die drei Änderungen die Anti-Diebstahlsicherung 11 so sicher, daß sie praktisch nicht mehr aufgebrochen werden kann.

## Patentansprüche

1. Diebstahlsicherungsvorrichtung zur Befestigung am Kranz (13) eines Lenkrades (15), welche die Drehbewegung des Lenkrades (15) begrenzt, mit einem sich über den Umfang des Lenkradkranzes (13) erstreckenden Teil und ersten und zweiten Eingriffmitteln zum Einhaken und Aushaken aus einander gegenüberliegenden Teilen des Lenkradkranzes an dessen Innenseite, wobei die Eingriffmittel aufeinander zu und voneinander weg bewegbar sind und wobei das erste Eingriffmittel ein Rohr (10) und das zweite Eingriffmittel eine langgestreckte Stange (12) mit mehreren Rastzähnen (44) aufweist, die in Längsrichtung der Stange im Abstand voneinander angeordnet sind und von denen jeder eine Kegelstumpffläche (46) und eine ringförmige Anschlagfläche (48) aufweist und wobei die Stange (12) axial in entgegengesetzten Richtungen in dem Rohr (10) bewegbar ist und wobei eine Verriegelungsvorrichtung (14) vorgesehen ist, die in Verriegelungsstellung mit einer Rastklinke (64) zwischen die Rastzähne (44) eingreift und hierbei eine Bewegung der Lenkrad-Eingriffmittel in nur einer der axial entgegengesetzten Richtungen ausschließt, wobei die Rastklinke (64) von einer Feder (62) mit ihrem vorderen Ende (70) zwischen die Rastzähne (44) gedrückt wird, wenn sich die Verriegelungsvorrichtung in ihrer Verriegelungsstellung befindet, **dadurch gekennzeichnet, daß** der Innendurchmesser (D_{S}) des Rohres (10) um höchstens 2 mm (0,08") größer ist als der größte Durchmesser (D_{R}) der Stange (12) und daß das vordere Ende (70) der Rastklinke (64) eine bogenlinienförmig gekrümmte Scheitelfläche (98) hat.

2. Diebstahlsicherungsvorrichtung nach Anspruch 1, **dadurch gekennzeichnet, daß** die Rastklinke (64) eine sich radial erstreckende, ebene Kontaktfläche (96) hat, die an einer Anschlagfläche (48) eines Rastzahnes (44) anliegt, wenn sich die Verriegelungsvorrichtung (14) in ihrer Verriegelungsstellung befindet.

3. Vorrichtung nach Anspruch 1 oder 2, **dadurch gekennzeichnet, daß** die axiale Länge (L₁) eines jeden Rastzahnes (44) an seiner äußeren Zylinderfläche (92) nicht größer als 1 mm (0,04") ist.

4. Vorrichtung nach einem der Ansprüche 1 bis 3, **dadurch gekennzeichnet, daß** die bogenlinienförmige Scheitelfläche (98) der Rastklinke (64) einen Krümmungsradius hat, der dem Radius (Dr/2) des größeren Außenumfanges der Stange (12) entspricht.

5. Vorrichtung nach einem der Ansprüche 1 bis 4, **dadurch gekennzeichnet, daß** die axiale Länge (L₂) der bogenlinienförmigen Scheitelfläche (98) der Rastklinke (64) nicht größer ist als 1 mm (0,04").

6. Vorrichtung nach einem der Ansprüche 1 bis 5, **dadurch gekennzeichnet, daß** die Scheitelfläche (98) der Rastklinke (64) eine scharfe Kante bildet.

7. Vorrichtung nach einem der Ansprüche 1 bis 6, **dadurch gekennzeichnet, daß** die ringförmige Anschlagfläche (48) eines jeden Rastzahnes (44) sich von dessen Außenrand (93) senkrecht zur Achse (A) des Stangenteils (12) radial nach innen erstreckt.

8. Vorrichtung nach einem der Ansprüche 1 bis 7, **dadurch gekennzeichnet, daß** die Verriegelungsvorrichtung ein Schloßgehäuse (14) aufweist, das am ersten Ende des Rohres (10) befestigt ist und das koaxial zur Achse (A) einen Durchlaß (24) zur teleskopierbaren Aufnahme der Stange (12) aufweist und in dem die Rastklinke (64) und eine vorgespannte Feder (62) angeordnet ist, die die Rastklinke (64) in Eingriff mit den Rastzähnen (44) drückt, wenn die Stange (12) sich in dem Durchlaß (24) befindet und daß die Schließvorrichtung einen Schließzylinder (76) aufweist, mit dem die Rastklinke (64) entgegen der Federwirkung außer Eingriff mit den Rastzähnen (64) gebracht werden kann.

9. Vorrichtung nach Anspruch 8, **dadurch gekennzeichnet, daß** das Schloßgehäuse (14) rechtwinklig zur Achse (A) eine erste Bohrung (52) mit einem verschlossenen Ende (53) und einem offenen Ende am Durchlaß (24) aufweist und daß die Feder eine Schraubendruckfeder (62) ist, die sich am verschlossenen Ende abstützt, und daß die Rastklinke (64) mit einem Schaftstück (68) in der ersten Bohrung (52) angeordnet ist und von der Schraubendruckfeder (62) nach außen in Richtung auf den Durchlaß (24) gedrückt wird, wobei das Schaftstück (68) der Rastklinke (64) eine Kegelstumpffläche (99) aufweist, die mit den Kegelstumpfflächen (46) der Rastzähne (44) genau zusammenpaßt, so daß das Schaftstück (68) entgegen der Wirkung der Feder (62) in die Bohrung (52) zurückgedrückt wird, wenn die Stange (12) aus dem Rohr (10) herausgezogen wird.

10. Einrichtung nach einem der Ansprüche 8 oder 9, **dadurch gekennzeichnet, daß** das Schloßgehäuse (14) eine zweite Bohrung (56) aufweist, die mit ihrem inneren Ende in die erste Bohrung (52) mündet und deren äußeres Ende sich an der Außenseite (60) des Schloßgehäuses (14) befindet und die den Schließzylinder (76) fest und sicher aufnimmt, wobei der Schließzylinder (76) Nockenmittel (80) hat, die zwischen einer Schließstellung und einer Öffnungsstellung verdrehbar sind, wobei die Nockenmittel (80) mit der Rastklinke (64) in Eingriff sind, um diese gegen die Feder (62) zurückzuschieben, wenn die Nockenmittel (80) aus ihrer Schließstellung in ihre Öffnungsstellung verdreht werden.

## Claims

1. An anti-theft device for fixing to the rim (13) of a steering wheel (15), which restricts the rotary movement of the steering wheel (15), having a part which extends beyond the circumference of the steering wheel rim (13) and first and second engagement means for hooking into and unhooking from mutually opposite parts of the steering wheel rim on the inside thereof, wherein the engagement means can be moved towards each other and away from each other, and wherein the first engagement means comprises a tube (10) and the second engagement means comprises an elongated rod (12) having a plurality of locking teeth (44) which are disposed at a spacing from each other in the longitudinal direction of the rod and each of which comprises a frusto-conical face (46) and an annular stop face (48), and wherein the rod (12) is axially movable in opposite directions in the tube (10) and wherein a locking device (14) is provided, a locking catch (64) of which engages between the locking teeth (44) in the locked position and thereby prevents the movement of the steering wheel engagement means in one of the axially opposite directions only, wherein the front end (70) of the locking catch (64) is pushed between the locking teeth (44) by a spring (62) when the locking device is situated in its locked position, **characterised in that** the inside diameter (D_{S}) of the tube (10) is larger by 2 mm (0.08") at most than the largest diameter (D_{R}) of the rod (12), and that the front end (70) of the locking catch (64) has a vertex face (98) which is arcuately curved.

2. An anti-theft device according to claim 1, **characterised in that** the locking catch (64) has a radially extending, flat contact face (96) which is seated against a stop face (48) of a locking tooth (44) when the locking device (14) is situated in a locked position.

3. A device according to claim 1 or 2, **characterised in that** the axial length (L₁) of each locking tooth (44) at its outer cylindrical face (92) is not greater than 1 mm (0.04").

4. A device according to any one of claims 1 to 3, **characterised in that** the arcuate vertex face (98) of the locking catch (64) has a radius of curvature which corresponds to the radius (Dr/2) of the largest external circumference of the rod (12).

5. A device according to any one of claims 1 to 4, **characterised in that** the axial length (L₂) of the arcuate vertex face (98) of the locking catch (64) is not greater than 1 mm (0.04").

6. A device according to any one of claims 1 to 5, **characterised in that** the vertex face (98) of the locking catch (64) forms a sharp edge.

7. A device according to any one of claims 1 to 6, **characterised in that** the annular stop face (48) of each locking tooth (44) extends radially inwardly from the outer edge (93) thereof perpendicularly to the axis (A) of the rod part (12).

8. A device according to any one of claims 1 to 7, **characterised in that** the locking device has a lock housing (14) which is fixed to the first end of the tube (10) and which has a passageway (24) coaxial with the axis (A) for receiving the rod (12) telescopically, and in which the locking catch (64) and a prestressed spring (62) are disposed, which spring presses the locking catch (64) into engagement with the locking teeth (44) when the rod (12) is situated in the passageway (24), and that the closure device comprises a closing cylinder (76) with which the locking catch (64) can be brought out of engagement with the locking teeth (64) against the action of the spring.

9. A device according to claim 8, **characterised in that** the lock housing (14) comprises a first bore (52) at right angles to the axis (A), which bore has one closed end (53) and one open end at the passageway (24), and that the spring is a helical pressure spring (62) which is supported at the closed end, and that a shank piece (68) of the locking catch (64) is disposed in the first bore (52) and is pressed outwards towards the passageway (24) by the helical pressure spring (62), wherein the shank piece (68) of the locking catch (64) has a frusto-conical face (99) which is accurately matched to the frusto-conical faces (46) of the locking teeth (44) so that the shank piece (68) is pushed back into the bore (52) against the action of the spring (62) when the rod (12) is pulled out of the tube (10).

10. A device according to either one of claims 8 or 9, **characterised in that** the lock housing (14) comprises a second bore (56), the inner end of which leads into the first bore (52) and the outer end of which is situated on the outer face (60) of the lock housing (14) and fixedly and securely receives the closing cylinder (76), wherein the closing cylinder (76) comprises cam means (80) which can be turned between a closed position and an open position, wherein the cam means (80) are in engagement with the locking catch (64) so as to press the latter back towards the spring (62) when the cam means (80) are turned from their closed position into their open position.

## Revendications

1. Dispositif antivol destiné à être fixé sur la couronne (13) d'un volant de direction (15), qui limite le mouvement de rotation du volant (15), avec une partie s'étendant sur le pourtour de la couronne (13) du volant et des premiers ainsi que des deuxièmes moyens d'engagement pour l'accrochage et le décrochage de parties opposées les unes aux autres de la couronne du volant, sur son côté intérieur, les moyens d'engagement pouvant être rapprochés et éloignés les uns des autres et le premier moyen d'engagement comportant un tube (10) et le second moyen d'engagement, une barre (12) allongée avec plusieurs dents d'arrêt (44), qui sont disposées espacées les unes des autres dans la direction longitudinale de la barre et dont chacune présente une surface tronconique (46) et une surface de butée (48) annulaire, et la barre (12) étant déplaçable axialement, dans des sens opposés, dans le tube (10) et un dispositif de verrouillage (14) étant prévu, qui en position de verrouillage s'engage avec un cliquet d'arrêt (64) entre les dents d'arrêt (44) et interdit ainsi un déplacement des moyens d'engagement du volant dans l'un seulement des sens axialement opposés, le cliquet d'arrêt (64) étant pressé par un ressort (62) avec son extrémité avant (70), entre les dents d'arrêt (44), lorsque le dispositif de verrouillage se trouve dans sa position de verrouillage, caractérisé en ce que le diamètre intérieur (D_{S}) du tube (10) est au plus supérieur de 2 mm (0,08") au plus grand diamètre (D_{R}) de la barre (12) et en ce que l'extrémité avant (70) du cliquet d'arrêt (64) possède une surface de sommet (98) courbée en ligne d'arc.

2. Dispositif antivol selon la revendication 1, caractérisé en ce que le cliquet d'arrêt (64) possède une surface de contact (96) plane, s'étendant radialement, qui s'applique contre une surface de butée (48) d'une dent d'arrêt (44), lorsque le dispositif de verrouillage (14) se trouve dans sa position de verrouillage.

3. Dispositif selon la revendication 1 ou 2, caractérisé en ce que la longueur axiale (L₁) de chaque dent d'arrêt (44) n'est pas supérieure à 1 mm (0,4") sur sa surface de cylindre (92) extérieure.

4. Dispositif selon l'une des revendications 1 à 3, caractérisé en ce que la surface de sommet (98) en ligne d'arc du cliquet d'arrêt (64) possède un rayon de courbure, qui correspond au rayon (Dr/2) de la plus grande circonférence extérieure de la barre (12).

5. Dispositif selon l'une des revendications 1 à 4, caractérisé en ce que la longueur axiale (L₂) de la surface de sommet (98) en ligne d'arc du cliquet d'arrêt (64) n'est pas supérieure à un 1 mm (0,4").

6. Dispositif selon l'une des revendications 1 à 5, caractérisé en ce que la surface de sommet (98) du cliquet d'arrêt (64) forme une arête vive.

7. Dispositif selon l'une des revendications 1 à 6, caractérisé en ce que la surface de butée (48) annulaire de chaque dent d'arrêt (44) s'étend radialement vers l'intérieur à partir de son bord extérieur (93), perpendiculairement à l'axe (A) de la partie de barre (12).

8. Dispositif selon l'une des revendications 1 à 7, caractérisé en ce que le dispositif de verrouillage comporte un boîtier de serrage (14), qui est fixé à la première extrémité du tube (10) et qui présente, coaxialement à l'axe (A), un passage (24) pour le logement télescopique de la barre (12) et dans lequel est placé le cliquet d'arrêt (64) ainsi qu'un ressort (62) précontraint, qui presse le cliquet d'arrêt (64) en engagement avec les dents d'arrêt (44), lorsque la barre (12) se trouve dans le passage (24) et en ce que le dispositif de fermeture comporte un cylindre de fermeture (76), avec lequel le cliquet d'arrêt (64) peut être dégagé des dents d'arrêt (64), à l'encontre de l'effet du ressort.

9. Dispositif selon la revendication 8, caractérisé en ce que le boîtier de serrure (14) présente, perpendiculairement à l'axe (A), un premier perçage (52) avec une extrémité (53) fermée et une extrémité ouverte sur le passage (24) et en ce que le ressort est un ressort de pression hélicoïdal (62), qui prend appui contre l'extrémité fermée, et en ce que le cliquet d'arrêt (64) est placé avec un bout de barre (68) dans le premier perçage (52) et est pressé par le ressort de pression hélicoïdal (62), vers l'extérieur, en direction du passage (24), le bout de barre (68) du cliquet d'arrêt (64) présentant une surface tronconique (99), qui s'ajuste exactement avec les surfaces tronconiques (46) des dents d'arrêt (44), de sorte que le bout de barre (68) est repoussé, à l'encontre de l'effet du ressort (62), dans le perçage (52), lorsque la barre (12) est extraite du tube (10).

10. Dispositif selon l'une des revendications 8 ou 9, caractérisé en ce que le boîtier de serrure (14) présente un deuxième perçage (56), qui débouche avec son extrémité intérieure dans le premier perçage (52) et dont l'extrémité extérieure se trouve sur le côté extérieur (60) du boîtier de serrure (14) et qui loge fixement et sûrement le cylindre de serrure (76), le cylindre de serrure (76) possédant des moyens à came (80), qui peuvent tourner entre une position de fermeture et une position d'ouverture, les moyens à came (80) étant en engagement avec le cliquet d'arrêt (64), pour repousser celui-ci à l'encontre du ressort (62), lorsque les moyens à came (80) sont tournés de leur position de fermeture dans leur position d'ouverture.
